# EUROPEAN PATENT SPECIFICATION

(11) **EP 3 295 845 B1**
(45) Date of publication and mention of the grant of the patent: **18.08.2021**
(21) Application number: 16189495.1
(22) Date of filing: 19.09.2016
(51) Int. Cl.: A47J 47/18

(54) **BUCKET**
EIMER
SEAU

(43) Date of publication of application: 21.03.2018
(73) Proprietor: Hultafors Group AB, 517 21 Bollebygd (SE)
(72) Inventor: Widing, Maria, 517 21 Hultafors (SE); Envall, Daniel, 524 32 Herrljunga (SE)
(74) Representative: AWA Sweden AB

(56) References cited:
- DE-U1-202007 006 391
- US-A- 2 314 835
- US-A- 2 549 282
- US-A- 2 620 006
- US-A- 6 039 205
- None

## Description

### Technical field

The present invention relates to a bucket. The bucket may for example be used for carrying or holding tools, solids, liquids, etc.

### Background art

A bucket is typically a vertical cylinder or truncated cone, with an open top and a flat bottom (base). At the open top, there may be flange. The flange may serve to strengthen the bucket, for example if the bucket is made of plastic.

However, a cylindrical bucket can be uncomfortable to carry for a user. To this end, CN201071125Y discloses a bucket wherein one side of the circular bucket is provided with an arc groove along the bucket body. DE202007006391U1 discloses a similar solution. Furthermore, US2549282 discloses a carrying container having a concave wall portion. Furthermore, US6039205 discloses a stackable shopping basket in which the proximal side wall is inwardly curved in a contour adapted to an adult human user's body.

### Summary of the invention

The present inventor has realized that even a bucket of the type disclosed CN201071125Y or DE202007006391U1 may be uncomfortable to carry, should it be provided with a flange to strengthen the bucket in a conventional manner.

It is therefore an object of the present invention to provide an improved bucket, which bucket in particular may be comfortable to carry and at the same time may have a sufficient rigidity, even if it is made of for example plastic.

According to the present invention, there is provided a bucket according to independent claim 1.

The present invention is based on the understanding that such reinforcements can make the bucket more comfortable to carry without compromising the rigidity.

For example, the flange may at said portion have a reduced extension in the outward direction. The flange's extension in the outward direction at said portion may be in the range of 45%-70% of the flange's extension in the outward direction at another portion of the side wall. By locally reducing the flange's extension in the outward direction at the concave portion, the bucket is more comfortable to carry for the user. At the same time, the reinforcements allow the bucket to maintain its rigidity, despite the locally reduced flange.

Furthermore, each reinforcement may be adapted to provide a smooth transition between the flange and the side wall (below the reinforcements). In this way, any discomfort typically caused by the lower edge of the flange on a conventional bucket is removed or at least alleviated. To this end, the reinforcements' extension in the outward direction may diminish in the direction towards the base, for example linearly or along a concave or convex curve.

Hence the reinforcements may have two purposes: strengthening the bucket when the flange is locally reduced at the concave portion, and providing a smooth transition between the flange and the side wall. The present bucket can have just one of these features or both in combination.

It should be noted that reinforcements on a bucket are know per se for example from US5064090, but not locally at an outer concave portion, and not in combination with a reduced flange.

The reinforcements may be hollow ridges, as seen from the outside of the bucket. As seen from the inside, the hollow ridges appear as grooves. The reinforcements may also be regarded as corrugations in the concave portion of the side wall. Alternatively, the reinforcements could be solid elements added to the outside of the side wall at said concave portion, for example.

The reinforcements may have the same or substantially the same material thickness as the rest of the concave portion. In this way, the reinforcements do not have to add to the total weight of the bucket. 'Substantially' may bere be construed as no more than ±30%.

According to the present invention, the reinforcements have the same or substantially the same extension in the downward direction as the flange has at another portion of the side wall. This may improve the stackability of the bucket.

The sidewall apart from the concave portion is typically devoid of reinforcements of the type mentioned above.

The bucket, in particular the base, the side wall, the flange and the reinforcements, may at least partly be made of plastic, such as PP, LDPE, HDPE, etc. The bucket may for example be injection molded.

The bucket may further comprise a carrying handle.

### Brief description of the drawings

This and other aspects of the present invention will now be described in more detail, with reference to the appended drawings showing one or more embodiments of the invention.
Fig. 1 is a perspective view of a bucket according to embodiments of the present invention.
Fig. 2 is another perspective view of the bucket of fig. 1.
Fig. 3 is a top view of the bucket of fig. 1.
Fig. 4 is a side view of the bucket of fig. 1.
Fig. 5 is a partial sectional view of section I (see fig. 2).
Fig. 6 is a partial sectional view of section II (see fig. 2).

### Detailed description

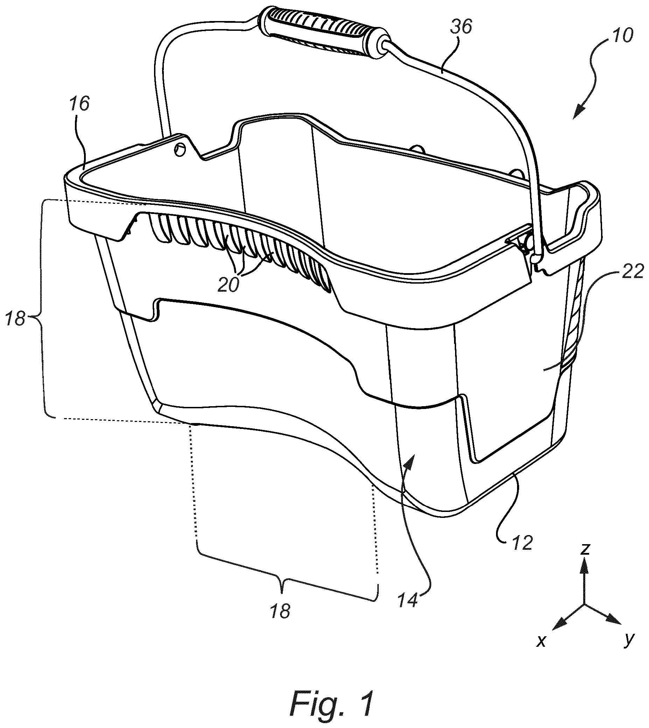

Figures 1-4 illustrate a bucket 10 according to the present invention. The bucket 10 may for example be used for carrying or holding tools, solids, liquids, etc. The bucket 10 may be carried by a user (person). The present bucket 10 should not be confused with the scoop of an excavating machine, which also may be called a bucket.

The bucket 10 comprises a base 12, a side wall 14 extending from the base 12, and a flange 16 at the top of the side wall 14 opposite the base 12. The base 12, a side wall 14, and the flange 16 can be made of plastic, or at least comprise a plastic material, such as such as PP, LDPE, HDPE, etc. The base 12, the side wall 14, and the flange 16 can be made in one piece. The bucket 10, in particular the base 12, the side wall 14 and the flange 16, may be injection molded.

The base 12 is substantially flat, but may include two feet 24a-b at opposite ends of the base 12.

The side wall 14 extends around the complete base 12. As seen from above, the side wall 14 has two opposite short sides 26a-b and two opposite long sides 28a-b. The respective sides are connected by rounded corners 30a-d. The volume of the bucket 10 as defined by the base 12 and the side wall 14 may be in the range of 10-20 liters, for example,

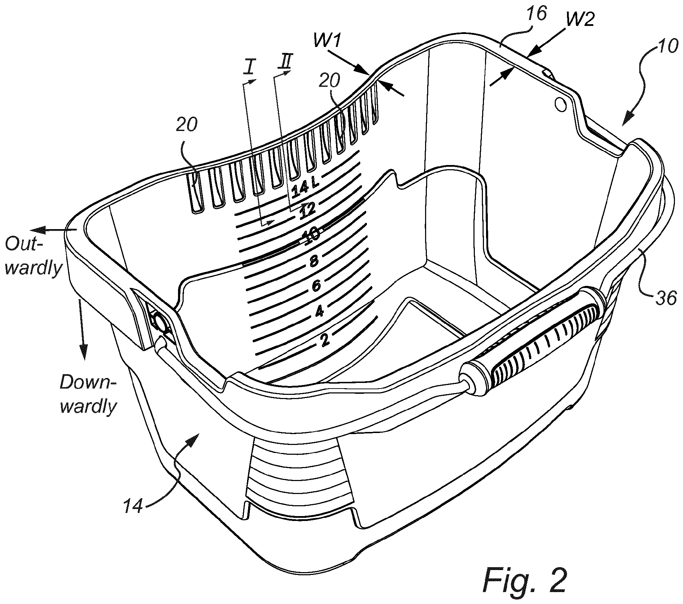

The flange 16 may extend completely or partly around the side wall 14. The flange 16 is outwardly and downwardly directed, as indicated in fig. 2. 'Outwardly' may be construed as away from the outside of the side wall 14, and 'downwardly' may be construed as towards the base 12 or towards a horizontal plane on which the bucket 10 is standing on its two feet 24a-b.

The bucket 10 may further comprise a carrying handle 36. The carrying handle 36 may be U-shaped or shaped like an arc. The carrying handle 36 may be attached at the short sides 26a-b.

The side wall 14 includes a portion 18 which is concave, as seen from the outside of the bucket 10 (fig. 1). In other words, the portion 18 has a concave exterior or outside. As seen from the inside of the bucket 10 (fig. 2), this portion 18 is convex. The portion 18 is here situated on the long side 28a. The portion 18 may extend from the base 12 to the top of the side wall 14, and between the two feet 24a-b.

The concave portion 18 is intended to face and possibly rest against the leg 32 or hip of a user, when the bucket 10 is carried by the user. To this end, the portion 18 may be curved or arched about an axis 34 which is perpendicular or substantially perpendicular to the base 12 of the bucket 10.

Although the portion 18 in the illustrated embodiment is continuously curved, it could be formed by a plurality of discrete segments angled relative to each other so that the overall impression is that the portion 18 is concave.

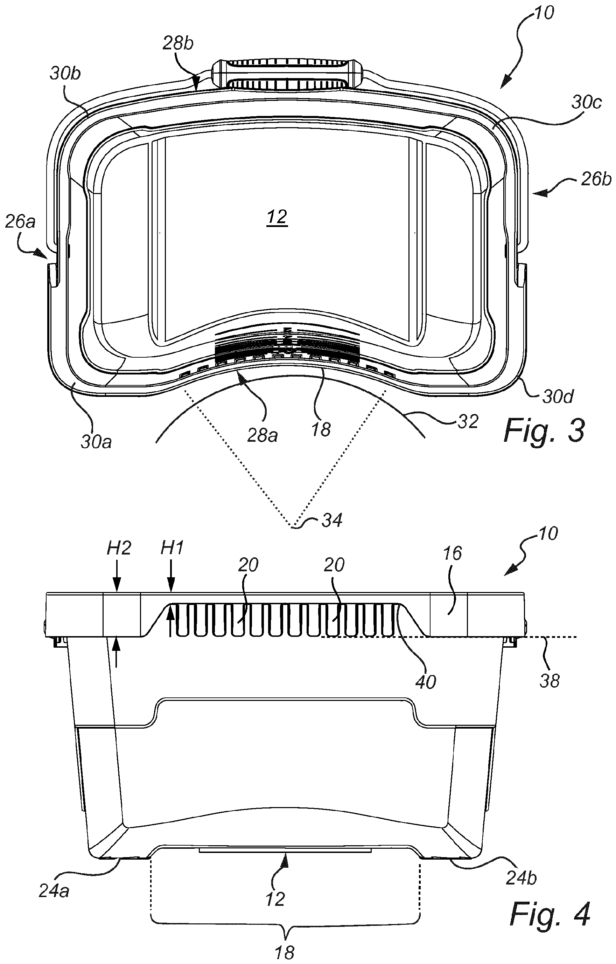

The side wall 14 at the concave portion 18 further includes a plurality of reinforcements 20. The reinforcements 20 extend from the flange 16 and towards the base 12. The reinforcements 20 may extend in the downward direction below the lower edge 40 of the flange 16 at the concave portion 18 (see fig. 4). The reinforcements 20 may be elongated in the downward direction. The reinforcements 20 may be parallel relative to each other. The number of reinforcements 20 may be in the range of 10-20, for example.

The sidewall 14 apart from the concave portion 18, i.e. the short sides 26a-b, the long side 28b, and any remaining portion(s) of the long side 28a, typically does not have reinforcements 20. However, the bucket 10 may except at the concave portion 18 have thin, transverse elements (not shown) under the flange 16, extending between the side wall 14 and the flange 16, to prevent distortion of the flange 16.

The reinforcements 20 in the illustrated bucket 10 are hollow ridges, as seen from the outside of the bucket 10 (fig. 1). As seen from the inside (fig. 2), the hollow ridges appear as grooves. These reinforcements 20 may have the same material thickness as the rest of the concave portion 18, for example 2 mm. The reinforcements 20 can be made of the same material as the rest of the side wall 14. The reinforcements 20 may be formed when the bucket 10 is injection molded using a suitably shaped mould. The reinforcements 20 may also be regarded as corrugations in the concave portion 18 of the side wall 14, i.e. ridges or grooves of a surface that has been corrugated.

In addition to the reinforcements 20 at the concave portion 18, the flange 16 may also have a special design at this portion 18 of the side wall 14. For example, the flange 16 may at the concave portion 18 have a reduced extension (or width) W1 in the outward direction. The flange's extension W1 in the outward direction at the concave portion 18 may for example be in the range of 45%-70% of the extension W2 of the flange 16 in the outward direction at another portion 22 of the side wall 14. W1 may for example be 7 mm, whereas W2 is 10 mm or 15 mm. The other portion 22 may for example be situated on at least one of the short side 26a, the short side 26b, and the long side 28b.

Furthermore, the flange 16 may at the concave portion 18 have a reduced extension (height) H1 in the downward direction. In other words, the height H1 of the flange 16 may be smaller at the concave portion than the height H2 of the flange 16 at the other portion 22.

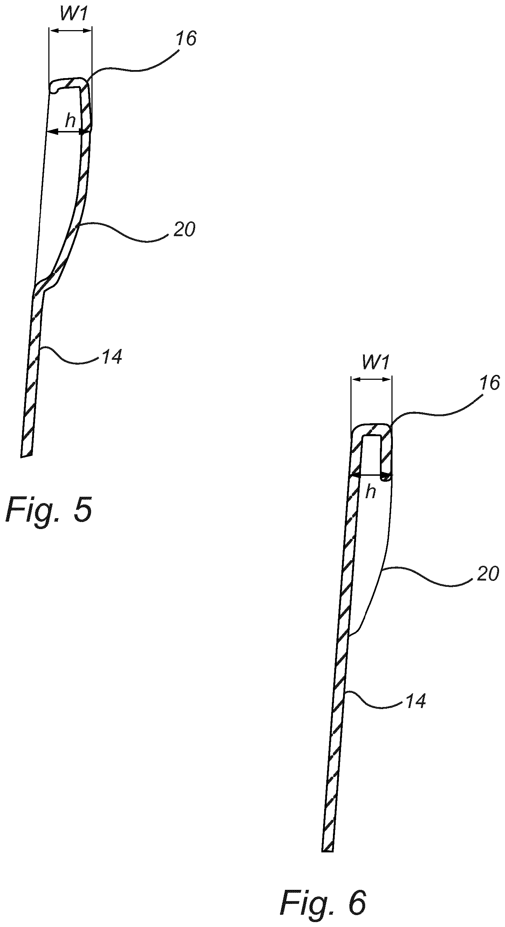

Returning to the reinforcements 20, each reinforcement 20 may be adapted or designed to provide a smooth transition between the flange 16 and the side wall 14 below the reinforcements 20. As seen in particular in figures 5-6, the reinforcements 20 may have an upper height h that matches the width W1 of the flange 16, whereafter the extension of the reinformcements 20 in the outward direction (i.e. the height) diminishs to zero in the direction towards the base 12. The height here diminishes along a convex curve, as seen from the outside.

Furthermore, the reinforcments 20 typically do not extend all the way to the base 12. According to the invention the reinforcements have the same extension in the downward direction as the flange 16 has at the other portion 22 of the side wall 14, see line 38 in fig. 4. This may improve the stackability of the bucket 10.

In use, the bucket 10 should be carried such that the concave portion 18 of the side wall 14 faces and possibly rests against the leg 32 or hip of the person carrying the bucket 10. The locally reduced width W1 of the flange 16 and/or the reinforcements 20 providing the aformentioned smooth transitions make(s) the bucket 10 very comfortable to carry. The concave portion 18 may also bring the centre of mass of the bucket 10 closer to the person carrying it.

The person skilled in the art realizes that the present invention by no means is limited to the preferred embodiments described above. On the contrary, many modifications and variations are possible within the scope of the appended claims.

## Claims

1. A bucket (10), comprising:
a base (12);
a side wall (14) extending from the base; and
an outwardly and downwardly directed flange (16) at the top of the side wall opposite the base,
wherein the side wall includes a portion (18) which is concave as seen from the outside of the bucket and intended to face and possibly rest against the leg (32) or hip of a user, and
wherein the side wall at said portion further includes a plurality of reinforcements (20) extending from the flange and towards the base,
**characterized in that** the reinforcements have the same or substantially the same extension in the downward direction as the flange has at another portion (22) of the side wall.

2. A bucket according to claim 1, wherein the flange at said portion (18) has a reduced extension (W1) in the outward direction.

3. A bucket according to claim 2, wherein the flange's extension (W1) in the outward direction at said portion (18) is in the range of 45%-70% of the flange's extension (W2) in the outward direction at another portion (22) of the side wall.

4. A bucket according to any preceding claim, wherein each reinforcement is adapted to provide a smooth transition between the flange and the side wall.

5. A bucket according to any preceding claim, wherein the reinforcements' extension in the outward direction diminishes in the direction towards the base.

6. A bucket according to any preceding claim, wherein the reinforcements are hollow ridges.

7. A bucket according to any preceding claim, wherein the reinforcements are corrugations in the said portion (18) of the side wall.

8. A bucket according to any preceding claim, wherein the reinforcements have the same or substantially the same material thickness as the rest of the said portion (18).

9. A bucket according to any preceding claim, wherein the sidewall apart from said portion (18) is devoid of reinforcements (20).

10. A bucket according to any preceding claim, at least partly made of plastic.

11. A bucket according to any preceding claim, further comprising a carrying handle (36).

## Patentansprüche

1. Eimer (10), umfassend:
eine Basis (12);
eine Seitenwand (14), die sich von der Basis erstreckt; und
einen nach außen und nach unten gerichteten Flansch (16) an der Oberseite der Seitenwand gegenüber der Basis,
wobei die Seitenwand einen Abschnitt (18) beinhaltet, der von der Außenseite des Eimers gesehen konkav ist und dazu bestimmt ist, dem Bein (32) oder der Hüfte eines Benutzers zugewandt zu sein und möglicherweise daran anzuliegen, und
wobei die Seitenwand an dem Abschnitt ferner eine Vielzahl an Verstärkungen (20), die sich vom Flansch zur Basis hin erstrecken, umfasst
**dadurch gekennzeichnet, dass**
die Verstärkungen gleich oder im Wesentlichen die gleiche Ausdehnung nach unten haben, wie der Flansch an einem anderen Abschnitt (22) der Seitenwand hat.

2. Eimer nach Anspruch 1, wobei der Flansch an dem Abschnitt (18) eine verringerte Erstreckung (W1) in Richtung nach außen hat.

3. Eimer nach Anspruch 2, wobei die Erstreckung (W1) des Flansches nach außen hin an dem Abschnitt (18) im Bereich von 45 % bis 70 % der Erstreckung (W2) des Flanschs nach außen hin an einem anderen Abschnitt (22) der Seitenwand liegt.

4. Eimer nach einem der vorhergehenden Ansprüche, wobei jede Verstärkung dafür ausgelegt ist, einen glatten Übergang zwischen dem Flansch und der Seitenwand bereitzustellen.

5. Eimer nach einem der vorhergehenden Ansprüche, wobei die Erstreckung der Verstärkungen in Richtung nach außen hin in Richtung zum Boden hin abnimmt.

6. Eimer nach einem der vorhergehenden Ansprüche, wobei die Verstärkungen hohle Rippen sind.

7. Eimer nach einem der vorhergehenden Ansprüche, wobei die Verstärkungen Riffelungen in dem Abschnitt (18) der Seitenwand sind.

8. Eimer nach einem der vorhergehenden Ansprüche, wobei die Verstärkungen die gleiche oder im Wesentlichen die gleiche Materialdicke wie der Rest des Abschnitts (18) aufweisen.

9. Eimer nach einem der vorhergehenden Ansprüche, wobei die Seitenwand abgesehen von dem Abschnitt (18) frei von Verstärkungen (20) ist.

10. Eimer nach einem der vorhergehenden Ansprüche, zumindest teilweise aus Kunststoff gefertigt.

11. Eimer nach einem der vorhergehenden Ansprüche, ferner umfassend einen Tragegriff (36).

## Revendications

1. Seau (10), comprenant :
un socle (12) ;
une paroi latérale (14) s'étendant depuis la base ; et
une bride (16) dirigée vers l'extérieur et vers le bas au sommet de la paroi latérale à l'opposé de la base,
dans lequel la paroi latérale comprend une partie (18) qui est concave vue de l'extérieur du seau et destinée à faire face et éventuellement à reposer contre la jambe (32) ou la hanche d'un utilisateur, et
dans lequel la paroi latérale au niveau de ladite partie comprend en outre une pluralité de renforts (20) s'étendant depuis la bride et vers la base,
**caractérisé en ce que** les renforts ont la même extension ou sensiblement la même extension vers le bas que la bride a au niveau d'une autre partie (22) de la paroi latérale.

2. Seau selon la revendication 1, dans lequel la bride au niveau de ladite partie (18) a une extension réduite (W1) dans la direction vers l'extérieur.

3. Seau selon la revendication 2, dans lequel l'extension de la bride (W1) dans la direction vers l'extérieur au niveau de ladite partie (18) est dans la plage de 45 à 70 % de l'extension de la bride (W2) dans la direction vers l'extérieur au niveau d'une autre partie (22) de la paroi latérale.

4. Seau selon l'une quelconque des revendications précédentes, dans lequel chaque renfort est adapté pour fournir une transition en douceur entre la bride et la paroi latérale.

5. Seau selon l'une quelconque des revendications précédentes, dans lequel l'extension des renforts dans la direction vers l'extérieur diminue vers la base.

6. Seau selon l'une quelconque des revendications précédentes, dans lequel les renforts sont des arêtes creuses.

7. Seau selon l'une quelconque des revendications précédentes, dans lequel les renforts sont des ondulations dans ladite partie (18) de la paroi latérale.

8. Seau selon l'une quelconque des revendications précédentes, dans lequel les renforts ont la même ou sensiblement la même épaisseur de matériau que le reste de ladite partie (18).

9. Seau selon l'une quelconque des revendications précédentes, dans lequel la paroi latérale, sauf dans ladite partie (18), est dépourvue de renforts (20).

10. Seau selon l'une quelconque des revendications précédentes, fabriquée au moins en partie en plastique.

11. Seau selon l'une quelconque des revendications précédentes, comprenant en outre une poignée de transport (36).
